# EUROPÄISCHE PATENTSCHRIFT

(11) **EP 1 939 419 B1**
(45) Veröffentlichungstag und Bekanntmachung des Hinweises auf die Patenterteilung: **22.07.2009**
(21) Anmeldenummer: 07122717.7
(22) Anmeldetag: 10.12.2007
(51) Int. Cl.: F01N 3/025, F01N 3/20

(54) **Abgasanlage für eine Brennkraftmaschine**
Exhaust system for an internal combustion engine
Système d'échappement pour moteur à combustion interne

(30) Priorität: 19.12.2006 DE 102006060471
(43) Veröffentlichungstag der Anmeldung: 02.07.2008
(73) Patentinhaber: J. Eberspächer GmbH & Co. KG, 73730 Esslingen (DE)
(72) Erfinder: Gaiser, Gerd, 72768 Reutlingen (DE)
(74) Vertreter: Bongen, Renaud & Partner

(56) Entgegenhaltungen:
- EP-A- 0 306 743
- EP-A- 0 367 280
- EP-A- 0 631 039

## Beschreibung

Die vorliegende Erfindung betrifft eine Abgasanlage für eine Brennkraftmaschine, insbesondere in einem Kraftfahrzeug, gemäß dem Oberbegriff des Anspruchs 1. Die Erfindung betrifft außerdem ein Verfahren zum Erwärmen von Abgasen in einer Abgasanlage, gemäß dem Oberbegriff des Anspruchs 12.

Eine derartige Abgasanlage umfasst üblicherweise einen Abgasstrang, in welchem zumindest eine Abgasbehandlungseinrichtung, insbesondere ein Oxidationskatalysator oder ein Partikelfilter, zur Behandlung der von der Brennkraftmaschine kommenden Abgase angeordnet ist.

Nach einer längeren Stillstandszeit bedarf es beim Starten der Brennkraftmaschine während der sogenannten Kaltstartphase eine gewisse Zeit, bis die im Abgasstrang angeordneten Komponenten, wie beispielsweise die Abgasbehandlungseinrichtung, ihre Betriebstemperatur aufweisen. Während der Kaltstartphase, also in der Zeit, in welcher die Abgasbehandlungseinrichtung noch nicht ihre Betriebstemperatur aufweist, erfolgt ein erhöhter Schadstöffausstoß, da die reinigende Wirkung der Abgasbehandlungseinrichtung erst bei Erreichen der Betriebstemperatur erreicht werden kann. Insbesondere eine als Oxidationskatalysator ausgebildete Abgasbehandlungseinrichtung zeigt unterhalb ihrer Betriebstemperatur keine oder nur eine deutlich reduzierte Oxidationswirkung für unverbrannte oder nicht vollständig verbrannte Kohlenwasserstoffe. Um die Schadstoffemission auch während der Kaltstartphase möglichst gering halten zu können, und damit immer strenger werdenden Umweltschutzbedingungen gerecht werden zu können, ist es wünschenswert, die Kaltstartphase der Brennkraftmaschine möglichst kurz auszugestalten.

Aus der DE 10 2004 048 335 A1 ist eine Abgasanlage für eine Brennkraftmaschine, insbesondere in einem Kraftfahrzeug bekannt, welche einen Abgasstrang und einen in diesem angeordneten Oxidationskatalysator aufweist. Stromauf des Oxidationskatalysators ist eine Pre-Oxidationseinheit im Abgasstrang angeordnet, die an eine Sekundär-Kraftstoffversorgung angeschlossen und so ausgestaltet ist, dass sie in einem Katalysatoraufheizbetrieb den zugeführten Sekundärkraftstoff in Verbindung mit einem Oxidator vorzugsweise vollständig oxidiert. Hierdurch soll insbesondere die Kaltstartphase der Brennkraftmaschine verkürzt werden.

Aus der EP 0 631 039 A1 ist ein Brenner zur schnellen oder motorunabhängigen Aufheizung eines Abgaskatalysators bekannt, wobei der Brenner zur Erzeugung eines Abgasstroms dient. Besagter Abgasstrom wird dem Abgas eines Fahrzeugmotors beigemischt, um so das Motorabgas schnell auf die für den nachfolgenden Katalysator erforderliche Temperatur zu bringen. Der bekannte Brenner weist hierzu eine Aufteilung der Verbrennungsluft in einen der Zündung eines fetten Gemischs dienen Primärluftstrom und einen Sekundärluftstrom auf, der einer Ringbrennkammer zugeführt wird. Die Brennstoffzufuhr erfolgt über einen Stutzen direkt in den Primärluftstrom. Hierdurch wird beim bekannten Brenner eine Voroxidationszone, die den Brennstoff und den Primärluftstrom erhält, sowie eine stromab davon angeordnete Nachoxidationszone geschaffen, die den Sekundärluftstrom erhält und in die die Reaktionsprodukte der Voroxidationszone eintreten. Beim bekannten Brenner ist der Übergang von der Voroxidationszone zur Nachoxidationszone direkt.

Weitere Abgasanlagen mit Brennern, die eine Voroxidationszone und eine Nachoxidationszone aufweisen können, sind aus der EP 0 367 280 A1 und aus der EP 0 306 743 A2 bekannt.

Die vorliegende Erfindung beschäftigt sich mit dem Problem, für eine Abgasanlage der gattungsgemäßen Art eine verbesserte oder zumindest eine andere Ausführungsförm anzugeben, die sich insbesondere durch eine verkürzte Kaltstartphase auszeichnet.

Dieses Problem wird erfindungsgemäß durch die Gegenstände der unabhängigen Ansprüche 1 gelöst. Vorteilhafte Ausführungsformen sind Gegenstand der abhängigen Ansprüche.

Die Erfindung beruht auf dem allgemeinen Gedanken, stromauf der Abgasbehandlungseinrichtung im Abgasstrang eine Vorrichtung zur Erwärmung der Abgase anzuordnen, welche an eine Kraftstoffversorgung und an eine, Primär- und Sekundärluft erzeugende Luftversorgung angeschlossen ist. Die Vorrichtung weist dabei eine Voroxidationszone und eine dazu stromab legende Nachoxidationszone auf, wobei die Voroxidationszone zur Versorgung mit flüssigen Kraftstoff an die Kraftstoffversorgung und zur Versorgung mit Primärluft an die Luftversorgung angeschlossen ist und dadurch eine Oxidation des Kraftstoff-Primärluftgemisches bewirken kann. Die Nachoxidationszone ist hingegen zur Versorgung mit Sekundärluft an die Luftversorgung angeschlossen und trägt dazu bei, nicht oxidierte Bestandteile des Gemisches aus Primärluft und Kraftstoff aus der Voroxidationszone in der Nachoxidationszone vorzugsweise vollständig zu oxidieren. In der Voroxidationszone erfolgt eine zumindest teilweise Oxidation des zudosierten Kraftstoffes mit der zudosierten Primärluft, während in der Nachoxidationszone mit Hilfe der zudosierten Sekundärluft eine weitere Oxidation des Gemisches erfolgen kann. Die Oxidation des Kraftstoffluftgemisches bewirkt eine effektive Erwärmung der Abgase und damit eine signifikante Verkürzung der Kaltstartphase. Dadurch erreicht die Abgasbehandlungseinrichtung schneller ihre erforderliche Betriebstemperatur, wodurch ein erhöhter Schadstoffausstoß in der Kaltstartphase reduziert werden kann.

Erfindungsgemäß ist zwischen der Voroxidationszone und der Nachoxidationszone eine poröse, durchströmbare Struktur angeordnet, welche so ausgebildet ist, dass sie einen Tröpfchendurchschlag von Kraftstoff in die Nachoxidationszone verhindert und ein Gemisch aus Kraftstoff, Primärluft und Oxidationsprodukten homogenisiert. Durch den beschriebenen Aufbau mit Voroxidationszone, poröser, durchströmbarer Struktur und Nachoxidationszone kann erreicht werden, dass die Hauptoxidation vorzugsweise stromab der porösen Struktur erfolgt. Dadurch wird auch die Hauptoxidationswärme stromab der porösen Struktur erzeugt bzw. frei, wodurch die poröse Struktur während des Betriebes der Vorrichtung insgesamt eine geringere Temperatur aufweist, was die Dauerhaltbarkeit positiv beeinflusst. Durch eine geringere Primärluftmenge wird aus der porösen Struktur darüber hinaus weniger Wärme abgeführt, was sich insbesondere beim Kaltstart positiv auf ein emissionsarmes Startverhalten auswirkt. Ebenso wird durch die geringere Primärluftmenge auch an einem Glühstift einer Zündeinrichtung in der Voroxidationszone weniger Wärme abgeführt, wodurch der Glühstift ein besseres und schnelleres Zündverhalten aufweist.

Bei einer vorteilhaften Weiterbildung der erfindungsgemäßen Lösung ist im Bereich einer Gehäusewand der Vorrichtung ein Sekundärluftkanal angeordnet, welcher die Voroxidationszone und die poröse Struktur ringförmig umgibt. Durch diesen Spalt zwischen einer Außenwand und einer Innenwand der Vorrichtung ergibt sich beim Betrieb der Vorrichtung eine insgesamt geringere Temperatur der Außenwand, was sich vorteilhaft hinsichtlich einer Temperaturbelastung der, die Vorrichtung umgebenden Bauteile, ergibt. Darüber hinaus kann durch den Sekundärluftkanal eine wirksame Reduzierung der Temperatur einer Innenwand der Vorrichtung erreicht werden, wodurch deren thermische Belastung abgesenkt werden kann.

Bei einer weiteren vorteilhaften Ausführungsform der erfindungsgemäßen Lösung weist die poröse Struktur zumindest eines der folgenden Materialien und/oder zumindest eine der folgenden Formen auf: Metallisches oder keramischen Vlies, metallischer oder keramischer Schaum, Wabenmonolith, metallisches oder keramisches Fasergestrick, Streckmetall, metallische Struktur mit einer keramischen Beschichtung, metallische oder keramische Struktur mit einer katalytischen Beschichtung. Dabei ist vorzugsweise eine Porosität der durchströmbaren Struktur so gewählt, dass der Druckverlust bei der Durchströmung einerseits nicht zu groß wird, andererseits der Druckverlust aber ausreichend groß ist, um eine gute Vergleichmäßigung bzw. Durchmischung des Gemisches aus Primärluft, Kraftstoff und Oxidationsprodukten bei der Durchströmung durch die poröse Struktur zu bewirken. Dabei ist die Porengröße und die Porosität der porösen Struktur so gewählt, dass ein Tröpfchendurchschlag von unverdampften Kraftstofftröpfchen wirkungsvoll unterbunden werden kann. Beispiele für eine geeignete aktive katalytische Beschichtung sind beispielsweise aufgebrachte Komponenten wie Platin, Palladium, Rhodium, Rhutenium oder weitere Edelmetalle. Durch die gezielte Wahl der aktiven Komponenten der katalytischen Beschichtung können die Voroxidationsreaktionen gezielt beeinflusst oder ausgewählt werden. Hierdurch ist eine besonders genaue Steuerung der Oxidationsreaktion möglich.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder funktional gleiche oder ähnliche Bauteile beziehen.

Es zeigen, jeweils schematisch,
- Fig. 1: eine Schnittdarstellung durch eine erfindungsgemäße Vorrichtung zur Erwärmung von Abgasen in einem Abgasstrang einer Brennkraftmaschine,

- Fig. 2 bis 6: eine Vorrichtung wie in Fig. 1, jedoch jeweils bei einer anderen Ausführungsform,
- Fig. 7: eine Vorrichtung wie in Fig. 6, jedoch mit einem zusätzlichen Katalysator.

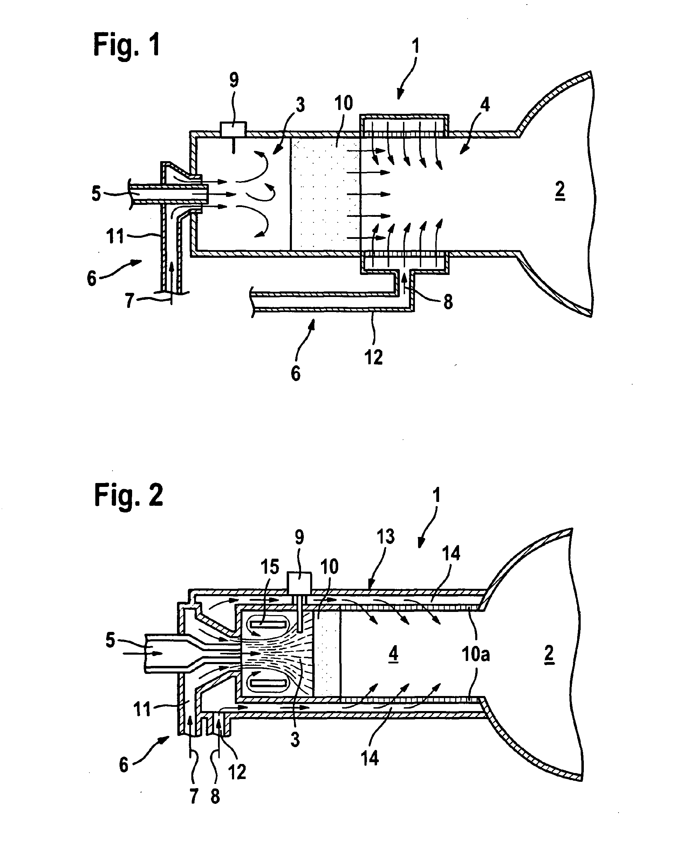

Entsprechend Fig. 1 ist eine Vorrichtung 1 zum Erwärmen von in einem Abgasstrang 2 strömenden Abgasen mit einer Voroxidationszone 3 und einer Nachoxidationszone 4 ausgestattet. Der Abgasstrang 2 ist dabei Teil einer im Übrigen nicht gezeigten Abgasanlage und führt von einer ebenfalls nicht gezeigten Brennkraftmaschine von dieser im Betrieb erzeugten Abgase von der Brennkraftmaschine weg. Die Brennkraftmaschine ist dabei vorzugsweise in einem Kraftfahrzeug angeordnet. Zur Behandlung bzw. Reinigung von in der Brennkraftmaschine erzeugten Abgasen weist die Abgasanlage stromab der erfindungsgemäßen Vorrichtung 1 eine im Abgasstrang 2 angeordnete und ebenfalls nicht gezeigte Abgasbehandlungseinrichtung, beispielsweise einen Oxidationskatalysator oder ein Partikelfilter auf.

Derartige Abgasbehandlungseinrichtungen benötigen, um ihre volle Wirkung entfalten zu können, eine erforderliche Mindestbetriebstemperatur, welche insbesondere in einer Kaltstartphase der Brennkraftmaschine nicht erreicht wird. Unterhalb der Betriebstemperatur kann die Abgasbehandlungseinrichtung jedoch lediglich unzureichend oder gar nicht arbeiten, so dass in diesem Temperaturbereich mit einer erhöhten Schadstoffemission zu rechnen ist. Um die Betriebstemperatur der Abgasbehandlungseinrichtung in der Kaltstartphase schneller erreichen zu können, ist die erfindungsgemäße Vorrichtung 1 vorgesehen. Die Vorrichtung 1 ist dabei stromauf der Abgasbehandlungseinrichtung angeordnet und an eine Kraftstoffversorgung 5 sowie eine Primär- und Sekundärluft erzeugende Luftversorgung 6 angeschlossen. Im folgenden wird dabei die Primärluft mit dem Bezugszeichen 7 und die Sekundärluft mit Bezugszeichen 8 bezeichnet. Die Primärluft 7 strömt zusammen mit aus der Kraftstoffversorgung 5 stammenden Kraftstoff in die Voroxidationszone 3 ein und wird dort homogenisiert und von einer Zündeinrichtung 9, beispielsweise einem Glühstift, gezündet. Zur Versorgung der Voroxidationszone 3 mit Primärluft 7 und Kraftstoff ist diese an die entsprechende Kraftstoffversorgung 5 und an die entsprechende Luftversorgung 6 angeschlossen. Die Nachoxidationszone 4 hingegen ist zur Versorgung mit Sekundärluft 8 an die Luftversorgung 6 angeschlossen.

Zwischen der Voroxidationszone 3 und der Nachoxidationszone 4 ist eine poröse, durchströmbare Struktur 10 angeordnet, welche ein Strömungshindernis zwischen der Voroxidationszone 3 und der Nachoxidationszone 4 darstellt und zum einen einen Tröpfchendurchschlag von flüssigem Kraftstoff aus der Voroxidationszone 3 in die Nachoxidationszone 4 verhindern soll und zum anderen das in der Voroxidationszone 3 vorhandene Gemisch aus Kraftstoff, Primärluft 7 und Oxidationsprodukten auf dem Weg zur stromabgelegenen Nachoxidationszone 4 homogenisieren soll.

In der Nachoxidationszone 4 wird mit der Sekundärluft 8 ein weiterer Oxidator dem Gemisch aus Kraftstoff, Primärluft 7 und Oxidationsprodukten zugesetzt, so dass nach dem Verlassen der Nachoxidationszone 4 und beim Eintreten in den Abgasstrang 2 vorzugsweise eine vollständige Oxidation erfolgt ist. Wie der Fig. 1 dabei zu entnehmen ist, erfolgt eine Zuführung von Primärluft 7 in die Voroxidationszone 3 über eine erste Versorgungsleitung 11, während eine Zuführung von Sekundärluft 8 in die Nachoxidationszone 4 über eine separate, zweite Versorgungsleitung 12 erfolgt. Diese können wie eingangs erwähnt an eine gemeinsame Luftversorgung 6 angeschlossen sein.

Die poröse Struktur 10 kann dabei zumindest eines der folgenden Materialien und/oder zumindest eine der folgenden Formen aufweisen: Metallisches oder keramisches Vlies, metallischer oder keramischer Schaum, Wabenmonolith, metallisches oder keramisches Fasergestrick, Streckmetall, metallische Struktur mit einer keramischen Beschichtung, metallische oder keramische Struktur mit einer katalytischen Besichtung. Demgegenüber kann auf der porösen Struktur auch eine Grundierung aufgebracht sein, beispielsweise ein sogenannter Washcoat, die zumindest eine der folgenden Komponenten aufweist: Aluminiumoxid, Titanoxid, Ceriumoxid. Alternativ hierzu kann vorgesehen sein, dass zwischen der porösen Struktur 10 und der katalytischen Beschichtung eine Grundierung angeordnet ist, welche zumindest eine der eben erwähnten Komponenten aufweist. Insbesondere die sauerstoffspeichernde Wirkung des Ceriumoxids ist an dieser Stelle besonders nützlich, da durch die gepulste Kraftstoffdosierung die örtlich vorliegenden Sauerstoffbedingungen periodisch schwanken und insbesondere zwischen oxidierenden und reduzierenden (bzw. mageren und fetten) Bedingungen des Brennstoffgemisches schwanken können. Die sauerstoffspeichernde Wirkung des Ceriumoxids kann hier ausgleichend wirken und somit zeitlich nahezu konstante Bedingungen schaffen.

Die poröse Struktur 10 ist dabei vorzugsweise als offenporige Struktur ausgebildet, wobei die Porosität so gewählt ist, dass einerseits der Druckverlust bei der Durchströmung nicht zu groß wird, dass aber andererseits der Druckverlust ausreichend groß ist, um eine gute Vergleichmäßigung, d.h. Durchmischung, bei der Durchströmung zu bewirken. Desweiteren ist die Porengröße und die Porosität so gewählt, dass der Tröpfchendurchschlag von unverdampften Kraftstofftröpfchen wirkungsvoll verhindert wird.

Die oben beschriebene katalytische Beschichtung kann beispielsweise aktive Komponenten, wie Platin, Palladium, Rhodium, Rhutenium oder weitere Edelmetalle enthalten und dadurch eine gezielte Beeinflussung bestimmter Voroxidationsreaktionen ermöglichen. Anstelle der edelmetallhaltigen Beschichtung kann auch eine Beschichtung aus Mischoxiden verwendet werden. Generell ist auch denkbar, dass die Wirkung einer sauerstoffspeichernden Komponente, wie beispielsweise dem Ceriumoxid, so groß ist, dass es sinnvoll erscheint, den Washcoat auch dann zu verwenden, wenn eine Imprägnierung mit Edelmetallen oder Mischoxiden nicht vorgesehen ist.

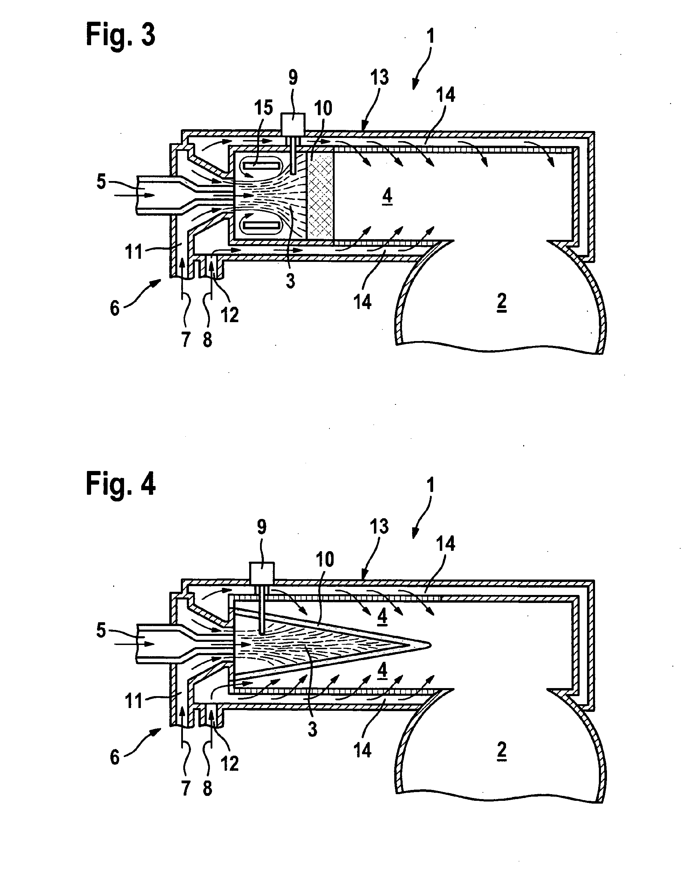

Generell kann die poröse Struktur 10 beispielsweise als Scheibe (vgl. Fig. 1 bis 3) als nicht gezeigte Hülse oder als Kegel (vgl. Fig. 4) ausgebildet sein.

Im Unterschied zu Fig. 1 ist bei den Vorrichtungen 1 gemäß den Fig. 2 bis 4 im Bereich einer Gehäusewand 13 der Vorrichtung 1 ein Sekundärluftkanal 14 vorgesehen, welcher die Voroxidationszone 3 und die poröse Struktur 10 ringförmig umgibt. Dies bietet den Vorteil, dass die im Sekundärluftkanal 14 strömende Sekundärluft 8 die Voroxidationszone 3 und die poröse Struktur 10 kühlt, woraus sich geringe Betriebstemperaturen und dadurch eine erhöhte Lebensdauer ergeben. Gleichzeitig verringert sich eine Temperaturbelastung für die Vorrichtung 1 umgebende Bauteile, da eine Außentemperatur der Vorrichtung 1 deutlich kühler ist. Der Sekundärluftkanal 14 ist dabei gemäß den Fig. 2 bis 4 in der Art eines Ringkanals ausgebildet. Dabei erfolgt eine Zuführung sowohl der Primärluft 7 als auch der Sekundärluft 8 im Bereich einer Kraftstoffzuführung, wodurch ein kompakter Anschlussbereich sowohl an die Kraftstoffversorgung 5 als auch an die Luftversorgung 6 geschaffen werden kann. Dabei ist die Primärluftzuführung vorzugsweise ringförmig um die Kraftstoffzuführung ausgebildet, so dass sich bereits beim Eintritt des Kraftstoffes und der Primärluft 7 in die Voroxidationszone 3 eine gute Durchmischung ergibt. Eine weitere Verbesserung hinsichtlich der Durchmischung kann beispielsweise über Leitelemente 15 oder über Wirbel und/oder Drall erzeugende Strömungsöffnungen erreicht werden. Diese können hinsichtlich ihrer Anzahl, ihrer Größe, ihrer Verteilung so angeordnet werden, dass sich eine vorzugsweise optimale Durchmischung in der jeweiligen Oxidationszone 3, 4 ergibt. Eine derartige Durchmischungshilfe bzw. Homogenisierungshilfe kann auch in der Art von porösen, durchströmbaren Strukturen 10a vorgesehen sein, welche beispielsweise zwischen dem Sekundärluftkanal 14 und der Nachoxidationszone 4 angeordnet sind und eine flächige Verteilung der eindosierten Sekundärluft 8 bewirken. Selbstverständlich kann eine derartige poröse, durchströmbare Struktur 10a auch im Bereich der Primär-Luftzuführung in der Voroxidationszone 3 angeordnet werden. Über die Porosität der porösen Struktur 10a kann dabei die Luftverteilung gezielt eingestellt werden, wobei über eine geringere Porosität eine eher flächige Verteilung der Luft und über eine gröbere Porosität ein eher zu Beginn der porösen Struktur 10a ausströmender Strom erreicht werden kann. Selbstverständlich lässt sich die flächig verteilte Luftzuführung durch die oben erwähnte poröse Struktur 10a auch mit einer örtlichen Verteilung von Strömungsöffnungen kombinieren bzw. verbinden. Insbesondere durch die Ausgestaltung der Strömungsöffnungen lässt sich eine unterschiedliche Tiefenwirkung der einströmenden Primärluft 7 bzw. Sekundärluft 8 erzeugen, wobei über diese Einströmtiefe die Luftverteilung bzw. Homogenisierung gezielt gesteuert werden kann. Als poröse Struktur 10a kann hierbei beispielsweise ein Vlies und/oder ein metallischer Schaum und/oder ein dünnes Blech mit Löchern, insbesondere mit geätzten Löchern, vorgesehen sein.

Gemäß der Fig. 4 ist die poröse Struktur 10 als Hohlkegel ausgebildet, wobei ein Kegelinneres die Voroxidationszone 3 und ein Kegeläußeres die Nachoxidationszone 4 darstellen. Die Zündeinrichtung 9, welche in der Gehäusewand 13 der Vorrichtung 1 angeordnet ist, durchgreift dabei zunächst die Gehäusewand 13 und die Nachoxidationszone 4 sowie die poröse Struktur 10, um mit ihrem zündfähigen Endbereich in die Voroxidationszone 3 einzutauchen. Dabei kann der Abgasstrang 2 beispielsweise wie in den Fig. 1 und 2 gezeigt längsendseitig der Vorrichtung 1 oder aber seitlich der Vorrichtung 1 (vgl. Fig. 3 und 4) angeordnet und mit der Nachoxidationszone 4 kommunizierend verbunden sein. Selbstverständlich erheben die Ausführungsformen gemäß den Fig. 1 bis 4 keinen Anspruch auf Vollständigkeit, so dass auch eine andere Anordnung bzw. Ausrichtung der Vorrichtung 1 bezüglich des Abgasstrangs 2 oder eine andere Ausführung bzw. Anordnung porösen Struktur 10 von der Erfindung mit umfasst sein sollen, solange die poröse Struktur 10 eine Voroxidationszone 3 von einer Nachoxidationszone 4 der Vorrichtung 1 trennt.

### Erfindungsgemäß funktioniert die Vorrichtung 1 wie folgt:

Zunächst wird ein Gemisch aus Primärluft 7 und Kraftstoff über entsprechende Strömungsöffnungen so in die Voroxidationszone 3 eingeführt, dass sich ein homogenes Gemisch aus Kraftstoff und Primärluft 7 ergibt. Dieses Kraftstoff-Primärluft-Gemisch ist leicht entzündlich und kann dadurch einfach von der Zündeinrichtung 9 entflammt werden, so dass das Gemisch zumindest teilweise oxidiert. Stromab der Voroxidationszone 3 ist die zwischen der Voroxidationszone 3 und der Nachoxidationszone 4 gelegene poröse Struktur 10 angeordnet, welche das zumindest teilweise oxidierte Gemisch aus Kraftstoff, Primärluft 7 und Oxidationsprodukten vergleichsmäßigt bzw. homogenisiert und zudem einen Tröpfchendurchschlag von nicht oxidiertem Kraftstoff in die Nachoxidationszone 4 zuverlässig verhindert. In der Nachoxidationszone 4 wird über die zweite Versorgungsleitung 12 zusätzlich Oxidator, beispielsweise Luft, zugeführt, wodurch eine vorzugsweise vollständige Verbrennung bzw. Oxidation noch nicht oxidierter bzw. verbrannter Bestandteile erreicht werden kann. Der die Nachoxidationszone 4 verlassende heiße Oxidationsstrom trifft im Abgasstrang 2 auf die von der Brennkraftmaschine stammenden Abgase und erwärmt diese. Durch die derart erwärmten Abgase erreicht die, im Abgasstrang 2 stromab der Vorrichtung 1 angeordnete Abgasbehandlungseinrichtung schneller ihre Betriebstemperatur, wodurch die Kaltstartphase mit einem erhöhten Schadstoffausstoß verkürzt werden kann. Dabei können die Oxidationen in der Voroxidationszone 3 und der Nachoxidationszone 4 wirkungsvoll durch die entsprechende Dosierung von Primärluft 7 und Sekundärluft 8 gesteuert werden.

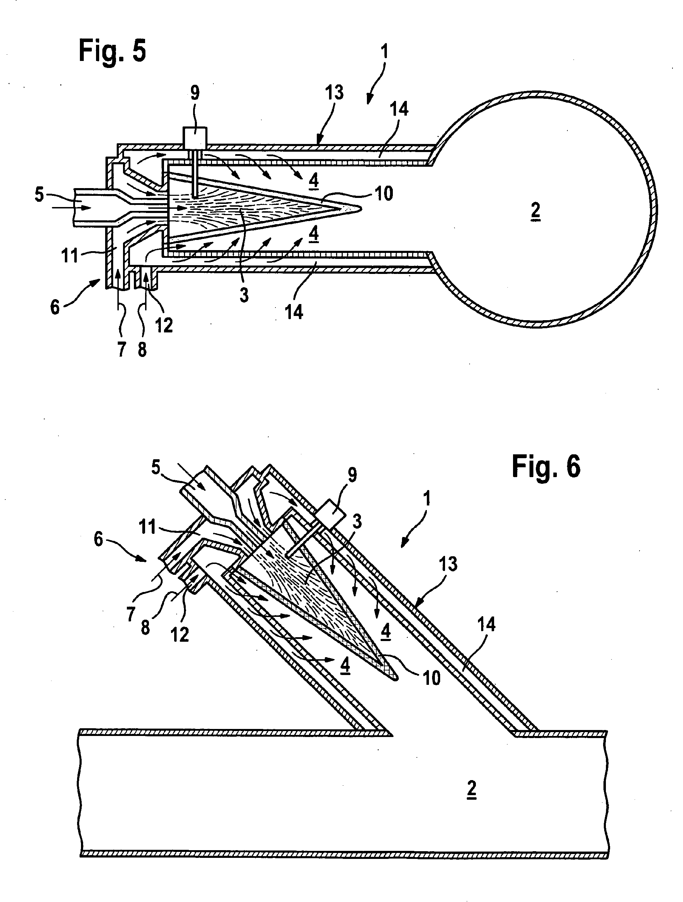

Fig. 5 stellt im wesentlichen eine Kombination der Vorrichtung 1 nach Fig. 4 und der Anordnung des Abgasstranges 2 nach Fig. 2 dar. Hierbei sind die poröse Struktur 10 bzw. die Vorrichtung 1 seitlich des Abgasstranges 2 angeordnet.

In Fig. 6 ist die Vorrichtung 1 um einen Winkel von ca. 20 bis 60°, vorzugsweise um ca. 30 bis 50°, geneigt zum Abgasstrang 2 angeordnet. Die Vorrichtung 1 gemäß der Fig. 6 entspricht dabei der in Fig. 4 dargestellten, so dass bezüglich der Beschreibung darauf zurückgegriffen werden kann.

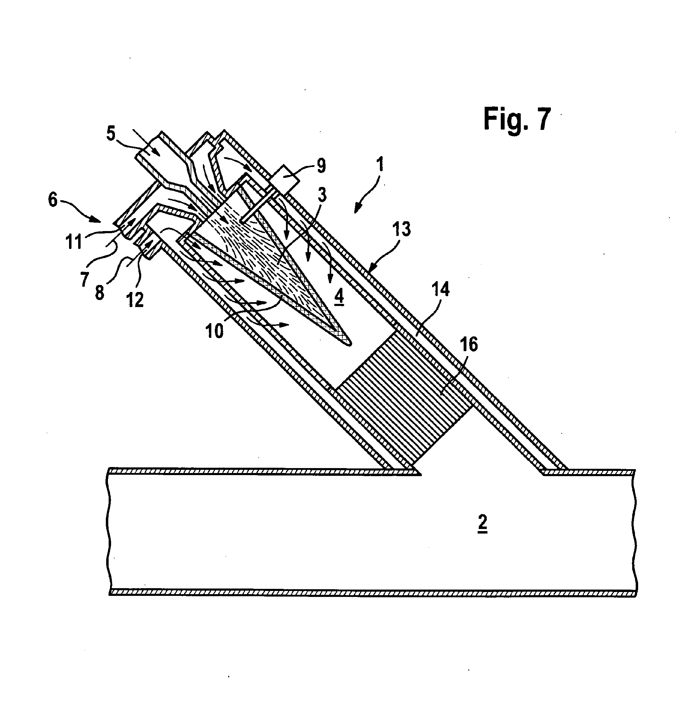

In Fig. 7 ist im Unterschied zu Fig. 6 zusätzlich noch ein Katalysator 16 zwischen der Vorrichtung 1 und dem Abgasstrang 2 angeordnet. Der Katalysator 16 kann dabei ergänzend oder anstatt der katalytischen Beschichtung der porösen Struktur 10 zum Einsatz kommen und als keramischer Wabenmonolith bzw. als metallischer Träger ausgebildet sein. Eine aktive Beschichtung des Katalysators 16 kann entweder als Oxidationskatalysator oder als Katalysator für eine partielle Oxidation ausgebildet sein. Im ersten Fall kann die Oxidation bei niedrigen Temperaturen erfolgen, während im zweiten Fall besonders gut Reformat, also Anteile von Wasserstoff und Kohlenmonoxid erzeugt werden können. Dieses Reformat kann wiederum vorteilhaft für die Regeneration eines NOₓ-Speicherkatalysators sein.

Darüber hinaus ist die Vorrichtung 1 auch nicht auf eine Anwendung bei einer Brennkraftmaschine an einem Kraftfahrzeug beschränkt, sondern kann auch in anderen Einsatzbereichen, beispielsweise bei Brennern oder Reformern Anwendung finden.

## Patentansprüche

1. Abgasanlage für eine Brennkraftmaschine, insbesondere in einem Kraftfahrzeug,
- mit einem Abgasstrang (2), in dem zur Behandlung der von der Brennkraftmaschine kommenden Abgase eine Abgasbehandlungseinrichtung, insbesondere ein Oxidationskatalysator oder ein Partikelfilter, angeordnet ist,
- wobei stromauf der Abgasbehandlungseinrichtung eine Vorrichtung (1) zur Erwärmung der Abgase im Abgasstrang (2) angeordnet ist, die an eine Kraftstoffversorgung (5) und an eine, Primär- und Sekundärluft (7, 8) erzeugende Luftversorgung (6) angeschlossen ist,
- wobei die Vorrichtung (1) eine Voroxidationszone (3) und eine dazu stromab gelegene Nachoxidationszone (4) aufweist,
- wobei die Voroxidationszone (3) zur Versorgung mit flüssigem Kraftstoff an die Kraftstoffversorgung (5) und zur Versorgung mit Primärluft (7) an die Luftversorgung (6) angeschlossen ist, während die Nachoxidationszone (4) zur Versorgung mit Sekundärluft (8) an die Luftversorgung (6) angeschlossen ist,
**dadurch gekennzeichnet,**
**dass** zwischen der Voroxidationszone (3) und der Nachoxidationszone (4) eine poröse, durchströmbare Struktur (10) angeordnet ist, die so ausgebildet ist, dass sie einen Tröpfchendurchschlag von Kraftstoff in die Nachoxidationszone (4) verhindert und ein Gemisch aus Kraftstoff, Primärluft (7) und Oxidationsprodukten homogenisiert.

2. Abgasanlage nach Anspruch 1,
**dadurch gekennzeichnet,**
**dass** die poröse Struktur (10) zumindest eines der folgenden Materialien und/oder zumindest eine der folgenden Formen aufweist: Metallisches oder keramisches Vlies, metallischer oder keramischer Schaum, Wabenmonolith, metallisches oder keramisches Fasergestrick, Streckmetall, metallische Struktur mit einer keramischen Beschichtung, metallische oder keramische Struktur mit einer katalytische Beschichtung.

3. Abgasanlage nach Anspruch 2,
**dadurch gekennzeichnet,**
- **dass** auf der porösen Struktur (10) eine Grundierung aufgebracht ist, die zumindest eine der folgenden Komponenten aufweist: Aluminiumoxid, Titanoxid, Ceriumoxid, oder
- **dass** zwischen der porösen Struktur (10) und der katalytischen Beschichtung eine Grundierung angeordnet ist, die zumindest eine der folgenden Komponenten aufweist: Aluminiumoxid, Titanoxid, Ceriumoxid.

4. Abgasanlage nach einem der Ansprüche 1 bis 3,
**dadurch gekennzeichnet,**
**dass** die poröse Struktur (10) als Scheibe, als Hülse oder als Kegel ausgebildet ist.

5. Abgasanlage nach einem der Ansprüche 1 bis 4,
**dadurch gekennzeichnet,**
**dass** in der Voroxidationszone (3) der Vorrichtung (1) eine Zündeinrichtung (9) zur Zündung des Gemisches aus Kraftstoff und Primärluft (7) vorgesehen ist.

6. Abgasanlage nach einem der Ansprüche 1 bis 5,
**dadurch gekennzeichnet,**
**dass** eine Zuführung von Primärluft (7) in die Voroxidationszone (3) über eine erste Versorgungsleitung (11) erfolgt, während eine Zuführung von Sekundärluft (8) in die Nachoxidationszone (4) über eine separate, zweite Versorgungsleitung (12) erfolgt.

7. Abgasanlage nach einem der Ansprüche 1 bis 6,
**dadurch gekennzeichnet,**
**dass** im Bereich einer Gehäusewand (13) der Vorrichtung (1) ein Sekundärluftkanal (14) angeordnet ist, welcher die Voroxidationszone (3) und die poröse Struktur (10) ringförmig umgibt.

8. Abgasanlage nach einem der Ansprüche 1 bis 7,
**dadurch gekennzeichnet,**
**dass** die Primärluft (7) und/oder die Sekundärluft (8) über Wirbel und/oder Drall erzeugende Strömungsöffnungen in die entsprechende Oxidationszone (3, 4) gelangt.

9. Abgasanlage nach einem der Ansprüche 7 oder 8,
**dadurch gekennzeichnet,**
**dass** zwischen dem Sekundärluftkanal (14) und der Nachoxidationszone (4) eine poröse, durchströmbare Struktur (10a) zur flächigen Verteilung der eindosierten Sekundärluft (8) angeordnet ist.

10. Abgasanlage nach Anspruch 9,
**dadurch gekennzeichnet,**
**dass** die poröse Struktur (10a) ein Vlies und/oder einen metallischen Schaum und/oder ein dünnes Blech mit Löchern aufweist oder ist.

11. Abgasanlage zumindest nach Anspruch 8,
**dadurch gekennzeichnet,**
- **dass** eine Dosierung der Primärluft (7) und des Kraftstoffes so auf die Strömungsöffnungen abgestimmt sind, dass sich in der Voroxidationszone (3) ein homogenes Gemisch aus Kraftstoff und Primärluft (7) ergibt,
- **dass** das Kraftstoff-Primärluft-Gemisch leicht entzündlich ist und **dadurch** einfach von der Zündeinrichtung (9) entflammt werden kann, wobei es zumindest teilweise oxidiert,
- **dass** die poröse, durchströmbare Struktur (10) so ausgebildet ist, dass sie einen Tröpfchendurchschlag von nicht o-xidiertem Kraftstoff in die Nachoxidationszone (4) verhindert und ein Gemisch aus Kraftstoff, Primärluft (7) und Oxidationsprodukten Gemisch homogenisiert,
- **dass** die Sekundärluftzufuhr in die Nachoxidationszone (4) so dosiert ist, dass in der Nachoxidationszone (4) eine vorzugsweise vollständige Verbrennung bzw. Nachoxidation stattfindet.

12. Brennverfahren zum Erwärmen von Abgasen in einer Abgasanlage, insbesondere in einer Abgasanlage nach einem der Ansprüche 1 bis 11, für eine Brennkraftmaschine,
wobei zur Erwärmung der Abgase eine gestufte Oxidation erfolgt, indem in einer Voroxidationszone (3) ein Gemisch aus Kraftstoff und Primärluft (7) zumindest teilweise oxidiert wird und dieses Kraftstoff-Primärluftgemisch in einer Nachoxidationszone (4) mit Sekundärluft (8) beaufschlagt und einem erneuten Oxidationsvorgang unterzogen wird,
**dadurch gekennzeichnet,**
**dass** das zumindest teilweise oxidierte Kraftstoff-Primärluftgemisch vor dem Erreichen der Nachoxidationszone (4) eine poröse Struktur (10) durchströmt, welche zwischen der Voroxidationszone (3) und der Nachoxidationszone (4) angeordnet ist und welche das Kraftstoff-Primärluftgemisch homogenisiert.

## Claims

1. An exhaust system for a combustion engine, more preferably in a motor vehicle,
- with an exhaust gas train (2), in which for the treatment of the exhaust gases coming from the combustion engine an exhaust gas treatment device, more preferably an oxidation catalytic converter or a particle filter is arranged,
- wherein upstream of the exhaust gas treatment device a device (1) for heating the exhaust gases in the exhaust gas train (2) is arranged, which is connected to a fuel supply (5) and to an air supply (6) generating primary and secondary air (7, 8),
- wherein the device (1) comprises a pre-oxidation zone (3) and a re-oxidation zone (4) located downstream thereto,
- wherein the pre-oxidation zone (3) for the supply with liquid fuel is connected to the fuel supply (5) and for the supply with primary air (7) to the air supply (6), while the re-oxidation zone (4) for the supply with secondary air (8) is connected to the air supply (6),
**characterized in that** between the pre-oxidation zone (3) and the re-oxidation zone (4) a porous structure (10) through which a flow can flow is arranged which is embodied so that it prevents droplet penetration of fuel in the re-oxidation zone (4) and homogenises a mixture of fuel, primary air (7) and oxidation products.

2. The exhaust system according to Claim 1, **characterized in that** the porous structure (10) at least comprises one of the following materials and/or at least one of the following shapes: metal or ceramic matting, metal or ceramic foam, honeycomb monolith, metal or ceramic fibre knitting, expanded metal, metal structure with a ceramic coating, metal or ceramic structure with a catalytic coating.

3. The exhaust system according to Claim 2, **characterized**
- **in that** on the porous structure (10) a primer is applied which comprises at least one of the following components: aluminium oxide, titanium oxide, cerium oxide, or
- **in that** between the porous structure (10) and the catalytic coating a primer is arranged which comprises at least one of the following components: aluminium oxide, titanium oxide, cerium oxide.

4. The exhaust system according to any one of the Claims 1 to 3, **characterized in that** the porous structure (10) is embodied as a disc, sleeve or cone.

5. The exhaust system according to any one of the Claims 1 to 4, **characterized in that** in the pre-oxidation zone (3) of the device (1) an ignition device (9) for igniting the mixture of fuel and primary air (7) is provided.

6. The exhaust gas system according to any one of the Claims 1 to 5, **characterized in that** feeding of primary air (7) in the pre-oxidation zone (3) takes place via a first supply line (11), while feeding of secondary air (8) in the re-oxidation zone (4) takes place via a separate, second supply line (12).

7. The exhaust gas system according to any one of the Claims 1 to 6, **characterized in that** in the region of a housing wall (13) of the device (1) a secondary air channel (14) is arranged which surrounds the pre-oxidation zone (3) and the porous structure (10) ring-like.

8. The exhaust system according to any one of the Claims 1 to 7, **characterized in that** the primary air (7) and/or the secondary air (8) reach/es the relevant oxidation zone (3, 4) via flow openings generating vortices and/or spin.

9. The exhaust system according to any one of the Claims 7 or 8, **characterized in that** between the secondary air channel (14) and the re-oxidation zone (4) a porous structure (10a) through which flow can flow is arranged for the areal distribution of the metered-in secondary air (8).

10. The exhaust gas system according to Claim 9,
**characterized in that** the porous structure (10a) comprises or is a matting and/or a metal foam and/or a thin plate with holes.

11. The exhaust gas system at least according to Claim 8,
**characterized**
- **in that** metering of the primary air (7) and the fuel is so matched to the flow openings that a homogenous mixture of fuel and primary air (7) is obtained in the pre-oxidation zone (3),
- **in that** the fuel-primary air mixture is easily ignitable and through this can be easily ignited by the ignition device (9) during which it oxidizes at least partially,
- **in that** the porous structure (10) through which flow can flow is embodied so that it prevents droplet penetration of non-oxidized fuel in the re-oxidation zone (4) and homogenises a mixture of fuel, primary air (7) and oxidation product,
- that the secondary air supply in the re-oxidation zone (4) is so metered that preferentially complete combustion or re-oxidation takes place in the re-oxidation zone (4).

12. A combustion method for the heating of exhaust gases in an exhaust gas system, more preferably in an exhaust gas system according to any one of the Claims 1 to 11, for a combustion engine, wherein for the heating of the exhaust gases stepped oxidation takes place in that in a pre-oxidation zone (3) a mixture of fuel and primary air (7) is at least partially oxidized and this secondary air (8) is admitted to this fuel-primary air mixture in a re-oxidation zone (4) and said fuel-primary air mixture subjected to a renewed oxidation process, **characterized in that** the at least partially oxidized fuel-primary air mixture before the reaching of the re-oxidation zone (4) flows through a porous structure (10) which is arranged between the pre-oxidation zone (3) and the re-oxidation zone (4) and which homogenises the fuel-primary air mixture.

## Revendications

1. Installation d'échappement pour un moteur à combustion interne, en particulier sur un véhicule automobile, comprenant
- une branche d'échappement (2), dans laquelle est disposé, pour le traitement des gaz brûlés venant du moteur à combustion interne, un dispositif de traitement de gaz brûlés, en particulier un catalyseur à oxydation ou un filtre à particules,
- un dispositif (1) pour le réchauffement des gaz brûlés dans la branche d'échappement (2) étant disposé en amont du dispositif de traitement de gaz brûlés, lequel dispositif est raccordé à une alimentation en carburant (5) et à une alimentation d'air (6) générant de l'air primaire et de l'air secondaire (7, 8),
- le dispositif (1) présentant une zone de pré-oxydation (3) et une zone de post-oxydation (4) placée en aval de la première,
- la zone de pré-oxydation (3) étant raccordée pour l'alimentation en carburant liquide à l'alimentation en carburant (5) et pour l'alimentation en air primaire (7) à l'alimentation en air (6), alors que la zone de post-oxydation (4) est raccordée pour l'alimentation en air secondaire (8) à l'alimentation en air (6),
**caractérisée en ce que**
une structure (10) poreuse et pouvant être traversée est disposée entre la zone de pré-oxydation (3) et la zone de post-oxydation (4), laquelle structure est conçue de telle sorte qu'elle empêche un passage de gouttelettes de carburant dans la zone de post-oxydation (4) et homogénéise un mélange de carburant, d'air primaire (7) et de produits d'oxydation.

2. Installation d'échappement selon la revendication 1,
**caractérisée en ce que**
la structure (10) poreuse présente au moins l'un des matériaux suivants et/ou au moins l'une des formes suivantes : non-tissé métallique ou céramique, mousse métallique ou céramique, monolithe alvéolé, tricot en fibre métallique ou céramique, métal étiré, structure métallique avec un revêtement céramique, structure métallique ou céramique avec un revêtement catalytique.

3. Installation d'échappement selon la revendication 2,
**caractérisée en ce que**
- une couche de fond est appliquée sur la structure (10) poreuse, laquelle couche présente au moins l'un des composants suivants : oxyde d'aluminium, oxyde de titane, oxyde de cérium, ou
- **en ce qu'**une couche de fond est disposée entre la structure (10) poreuse et le revêtement catalytique, laquelle couche présente au moins l'un des composants suivants : oxyde d'aluminium, oxyde de titane, oxyde de cérium.

4. Installation d'échappement selon l'une quelconque des revendications 1 à 3,
**caractérisée en ce que**
la structure (10) poreuse est conçue comme un disque, comme un manchon ou comme un cône.

5. Installation d'échappement selon l'une quelconque des revendications 1 à 4,
**caractérisée en ce que**
un dispositif d'allumage (9) est prévu dans la zone de pré-oxydation (3) du dispositif (1) pour l'allumage du mélange de carburant et d'air primaire (7).

6. Installation d'échappement selon l'une quelconque des revendications 1 à 5,
**caractérisée en ce que**
une arrivée d'air primaire (7) dans la zone de pré-oxydation (3) s'effectue au moyen d'une première conduite d'alimentation (11), alors qu'une arrivée d'air secondaire (8) dans la zone de post-oxydation (4) s'effectue au moyen d'une seconde zone d'alimentation (12) séparée.

7. Installation d'échappement selon l'une quelconque des revendications 1 à 6,
**caractérisée en ce que**
un canal d'air secondaire (14), qui entoure la zone de pré-oxydation (3) et la structure (10) poreuse à la façon d'un anneau, est disposé dans la zone d'une paroi de boîtier (13) du dispositif (1).

8. Installation d'échappement selon l'une quelconque des revendications 1 à 7,
**caractérisée en ce que**
l'air primaire (7) et/ou l'air secondaire (8) parvient par des ouvertures d'écoulement générant tourbillon et/ou giration dans la zone d'oxydation (3, 4) correspondante.

9. Installation d'échappement selon l'une quelconque des revendications 7 ou 8,
**caractérisée en ce que**
une structure (10a) poreuse et pouvant être traversée est disposée entre le canal d'air secondaire (14) et la zone de post-oxydation (4) pour la répartition en deux dimensions de l'air secondaire (8) injecté par dosage.

10. Installation d'échappement selon la revendication 9,
**caractérisée en ce que**
la structure (10a) poreuse présente ou est un non-tissé et/ou une mousse métallique et/ou une tôle mince avec des trous.

11. Installation d'échappement au moins selon la revendication 8,
**caractérisée en ce que**
- un dosage de l'air primaire (7) et du carburant est adapté aux ouvertures d'écoulement de telle sorte qu'un mélange homogène de carburant et d'air primaire (7) est obtenu dans la zone de pré-oxydation (3),
- **en ce que** le mélange carburant-air primaire est facilement inflammable et peut être enflammé ainsi facilement par le dispositif d'allumage (9), sachant qu'il est au moins en partie oxydé,
- **en ce que** la structure (10) poreuse et pouvant être traversée est conçue de telle sorte qu'elle empêche un passage de gouttelettes de carburant non oxydé dans la zone de post-oxydation (4) et homogénéise un mélange de carburant, d'air primaire (7) et de produits d'oxydation,
- **en ce que** l'arrivée d'air secondaire dans la zone de post-oxydation (4) est dosée de telle sorte qu'une combustion ou une post-oxydation de préférence complète a lieu dans la zone de post-oxydation (4).

12. Procédé de combustion pour le réchauffement des gaz brûlés dans une installation d'échappement, en particulier dans une installation d'échappement selon l'une quelconque des revendications 1 à 11, pour un moteur à combustion interne, une oxydation échelonnée s'effectuant pour le réchauffement des gaz brûlés du fait qu'un mélange de carburant et d'air primaire (7) est oxydé au moins partiellement dans une zone de pré-oxydation (3) et que ce mélange de carburant et d'air primaire est alimenté avec de l'air secondaire (8) dans une zone de post-oxydation (4) et est soumis à une opération d'oxydation renouvelée,
**caractérisé en ce que**
le mélange de carburant et d'air primaire au moins en partie oxydé traverse une structure (10) poreuse avant d'atteindre la zone de post-oxydation (4), laquelle structure est disposée entre la zone de pré-oxydation (3) et la zone de post-oxydation (4) et qui homogénéise le mélange de carburant et d'air primaire.
